# EUROPEAN PATENT SPECIFICATION

(11) **EP 1 567 886 B1**
(45) Date of publication and mention of the grant of the patent: **24.05.2006**
(21) Application number: 03769805.7
(22) Date of filing: 11.11.2003
(51) Int. Cl.: G01S 11/02, G01S 5/02, H04B 1/707

(54) **Multipath mitigation**
Mehrwegkompensation
Attenuation multivoie

(30) Priority: 26.11.2002 GB 0227507
(43) Date of publication of application: 31.08.2005
(73) Proprietor: Koninklijke Philips Electronics N.V., 5621 BA Eindhoven (NL)
(72) Inventor: ROSENFELD, Josi, Redhill, Surrey RH1 5HA (GB)
(74) Representative: White, Andrew Gordon
(86) International application number: PCT/IB2003/005113
(87) International publication number: WO 2004/048998

(56) References cited:
- US-A- 5 142 551
- US-A- 5 347 536
- US-A- 6 031 882

## Description

The invention relates to a method and apparatus for multipath mitigation and a method of generating correlation shapes for use therein.

There are several applications, particularly for positioning, that require the time of flight of a radio frequency (RF) signal from a base station to a mobile station to be measured. These applications include GPS positioning, where the time of flight from satellites to a mobile station needs to be very accurately determined, and similar positioning schemes using a plurality of terrestrial base stations. Although the expression "station" is used herein, it will be evident that the particular unit, equipment or device that constitutes "the station" in any given scheme need not be stationary but may often be mobile. Thus, for example, the expressions "reception station" and "transmission station" are used generally herein, it being understood that the relevant reception/transmission units (equipments, devices) may be either mobile or stationary in any particular scheme.

In these schemes, the time of flight of a signal is generally measured using a correlation technique. To simplify the technique somewhat, pseudorandom signals are transmitted at known times. In the receiver, the received signals are correlated with locally generated signals having a variable delay compared with the transmitted signals. The delay is adjusted using a delay-locked loop until the local signals track the received signals, and the delay then gives the time of flight of the signals. The delay is adjusted so that the correlation between received and locally generated signals is maximal.

Signals travelling between the mobile station and the base station need not take the direct, line of sight (LOS) path, but can take any of a number of paths and arrive at slightly different times. The received signal is therefore the sum of a direct, LOS signal and the signals received on the multiple paths. The effects of these different paths are known as multipath effects. Such multiple paths can cause tracking errors and lead to inaccuracies in the estimation of the time of flight of the line of sight path and hence to positioning errors. In particular, the maximum correlation between locally generated and received signals can occur for longer delays than the delay for the direct LOS signal. Moreover, the multipath effects can cause changes in shape of the correlation function as a function of delay and these can cause difficulties in tracking techniques. Multipath effects can also cause problems in ranging applications in which the time of flight of a direct signal needs to be measured.

Multipath errors are difficult to correct. They are highly position and environment dependent, so that errors determined at one position cannot be used to correct for effects at another position. Further, the statistical properties of the multipath errors are complex.

There are several algorithms that have been used to carry out corrections. These include multipath estimating delay-lock loop (MEDLL) and minimum mean square estimator (MMSE), which have the advantage over alternative techniques that they are reasonably robust in the presence of noise. These techniques estimate parameters and allow for the improvement of estimates in the event of further information becoming available. The disadvantage of these prior art techniques is that they are computationally intensive and require many iterations to estimate parameters.

This is particularly true of the MMSE technique which has the best theoretical performance. In particular, no other estimator has a uniformly smaller mean-square error, i.e. if another estimator performs better than MMSE under certain multipath conditions, it will perform worse under other conditions. MMSE however has the significant disadvantage that it is computationally very intensive as the parameters are dealt with as random variables. It would therefore be beneficial to reduce the computational load compared with MMSE.

Moreover, no single algorithm is best in all circumstances. Different environments have different multipath capabilities and, at present, no single algorithm is best in all conditions. There is therefore a need for an approach to multipath mitigation that can adapt readily to different conditions.

According to the invention there is provided a method of multipath mitigation, including
providing a plurality of predetermined multipath correlation shapes according to predetermined multipath environments and corresponding correction shapes corresponding to each predetermined correlation shape with the direct line of sight component removed;
receiving a signal from a transmitter transmitting a signal of known form;
calculating a correlation shape between the received signal and the known form of the transmitted signal;
determining the best match of predetermined correlation shape to the calculated correlation shape by comparing the calculated correlation shape with a plurality of predetermined multipath correlation shapes corresponding to respective multipath environments; and
subtracting the respective correction shape corresponding to the determined best match correlation shape from the calculated received correlation shape to obtain a corrected correlation shape.

The technique is not computationally demanding since the pattern matching used to determine the best match is the only significant computational load. Moreover, the technique can give good results in a variety of different situations.

The inventor has realised that there are a variety of different multipath mechanisms and that these result in correlation shapes that depend on the underlying physical phenomena. For example, multipath diffuse scattering gives an exponential decay in the correlation function. Dominant reflections give various relative delays. Although the physics of two peaks may be the same, the peaks themselves will not be the same since time scales and amplitudes could be greater or smaller depending on the size of the environment. Accordingly, one or preferably two parameters, time and size, are required to scale the stored correlation shapes to the measured shapes.

Accordingly, the step of determining the best match of predetermined correlation shape to the calculated correlation shape obtained from the measured data may include comparing the calculated correlation shape to the predetermined correlation shapes scaled by one or more scaling parameters and determining the correlation shape and the scaling parameters that give the best match, and the step of subtracting the correlation shape subtracts the correction shape scaled by the scaling parameters.

In embodiments, the method is used to mitigate multipath effects in ranging. Accordingly, the method may further include the step of locating the peak of the corrected correlation shape to determine the time delay of the signal transmitted from transmitter to receiver.

It is of advantage that all the data collection and classification to determine the stored correlation and correction shapes is carried out in advance and hence does not need to be carried out in real time in processors in the transmitters and receivers which may have limited processing resources.

The invention also includes a method of generating the predetermined multipath correlation shapes for use in the multipath mitigation method described above, the method of generating the predetermined multipath correlation shapes including:
measuring and recording a set of experimental correlation data as a function of time using a variety of transmission and reception locations in a number of environments;
repeating the measurement and recording of experimental data of the sets of experimental correlation data whilst physically blocking the direct line of sight signal;
classifying the recorded experimental correlation data using automatic pattern matching techniques into a plurality of groups;
storing one set of correlation data representative of each group;
and storing a respective correction correlation shape corresponding to the representative set of correlation data, the correction correlation shape being the correlation shape of the repeated measurement without the direct LOS component corresponding to each representative data set.

In another aspect, the invention relates to a reception station (unit, equipment, device) comprising: a receiver arranged to receive a signal of known form transmitted from a transmission station (unit, equipment, device); and a memory storing a plurality of predetermined multipath correlation shapes corresponding to the correlation of transmitted and received signals transmitted from transmitter to receiver in predetermined multipath environments and respective correction shapes being correlation shapes in the multipath environments with the direct line of sight component of the signal transmitted from transmitter to receiver removed; wherein the reception station is arranged: to calculate a correlation shape between the received signal and the known form of the transmitted signal; to determine the best match of predetermined correlation shape to the calculated correlation shape by comparing the calculated correlation shape with the plurality of predetermined multipath correlation shapes corresponding to respective multipath environments; and to subtract the respective correction shape corresponding to the determined best match correlation shape from the calculated received correlation shape to obtain a corrected correlation shape.

The invention also relates to a system for multipath mitigation, including: a reception station as set out above and a transmission station arranged to transmit the signal of known form.

For a better understanding of the invention, an embodiment will now be described, purely by way of example, with reference to the accompanying drawings in which:
Figure 1 illustrates a system for multipath mitigation;
Figure 2 illustrates correlation shapes;
Figure 3 is a flow diagram of a method of collecting suitable data for use in multipath mitigation; and
Figure 4 shows a flow diagram of a method of multipath mitigation using collective data.

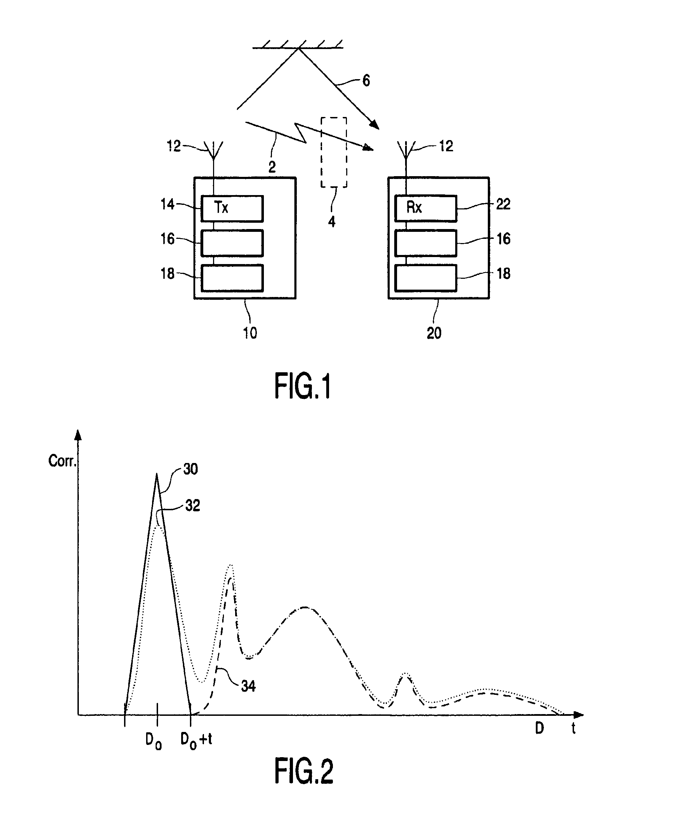

Referring to Figure 1, a transmission station generally indicated as 10 includes an antenna 12, transmitter 14, control unit 16 and memory 18. A signal 2 is transmitted to a reception unit generally indicated as 20, similarly having an antenna 12, a receiver 22, a control unit 16 and a memory 18. The control unit 16 may typically be a conventional processor.

The transmission station 10 is arranged to transmit a signal 2 having a known pseudorandom sequence to the receiver. The signal travels by a direct line of sight path 2, as well as one or more additional paths 6 illustrated schematically in Figure 1. The effects of these additional paths 6 are known as multipath effects.

In the embodiment described with reference to Figures 1 to 4, the goal is to measure the location of the reception unit 20 by calculating the time of flight of the direct line of sight signal 2 from the transmission unit to the reception unit. Since the transmitted signal includes a known pseudorandom sequence transmitted at a known time according to the clock in the transmission unit, the time of flight of the signal 2 can be determined. This is achieved by comparing the received signal with the known transmitted signal after a variety of delays D and finding the delay D that gives the best match between the received signal and the known transmitted signal.

This matching is carried out by obtaining the delay D that gives the best correlation between the received signal and the known signal. Logic circuitry and algorithms for carrying out this calculation are known and so will not be described further.

If the only path between the transmission unit 10 and the reception unit 20 were the direct line of sight path 2, the correlation as a function of time would be expected to have a shape similar to that shown in Figure 2 with a solid line (curve 30). Assuming each bit of the pseudorandom number sequence transmitted by the transmission unit 10 is transmitted for a time t and that successive bits are wholly uncorrelated the shape of the correlation peak is a triangle having a maximum at a delay Do, the correlation reducing linearly to zero at delays of Dₒ+t and D₀-t.

The effect of other paths (shown schematically as 6 in Fig.1) varies depending on the environment but may spread the correlation peak out or may alternatively or additionally provide additional peaks. The peaks relate to discrete reflectors, whereas the general smearing of the correlation peaks is caused by extended or diffused reflectors. Several closely spaced specular reflections can also give the appearance of smearing. In practice, it is likely that a combination of these effects will be observed as shown in the dotted lines in Figure 2 (curve 32).

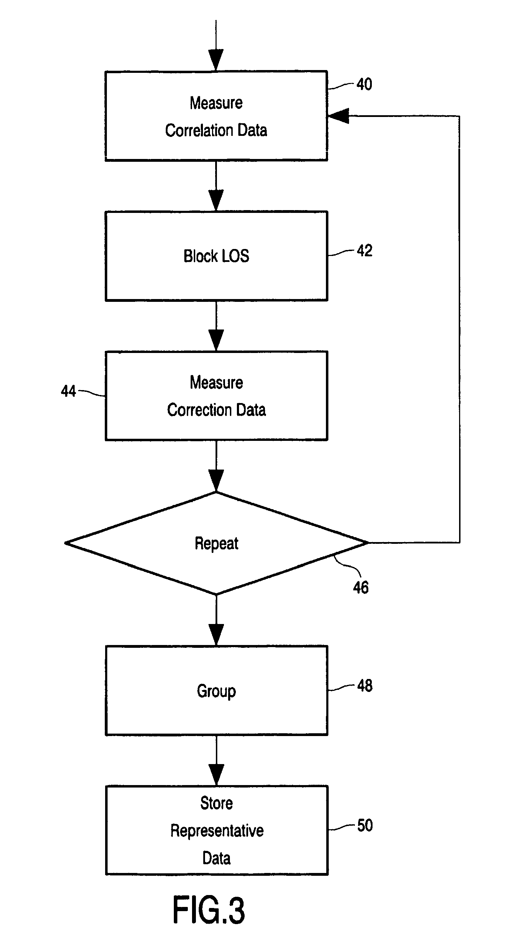

The multipath mitigation according to the invention uses experimental correlation data and correction data. The way of obtaining this data will now be described with reference to Figure 3.

Firstly, experimental correlation data is measured (step 40) for a known transmitter and receiver position.

The direct line of sight between transmitter and receiver is then blocked (step 42), for example by providing a suitable absorber on the direct path such as physical block 4 shown dashed in Figure 1. The correlation as a function of delay is then measured (step 44), and this correlation data will be referred to in the following as "correction data" to distinguish the data from the data recorded in step 40. Thus, the "correction data" is the correlation data obtained when the line of sight signal is blocked. The reason for the use of the term "correction data" will become apparent later.

The dashed lines (curve 34) in Figure 2 show the correction data. Note that the peak around delay Do due to the direct line of sight signal 2 is largely absent from the correction data, in stark contrast to the correlation data with the line of sight signal 2 present (curve 32) which shows a substantial peak around delay Do.

Steps 40, 42 and 44 are then repeated (step 46) to determine correlation data and correction data for various transmitter and receiver positions in a number of environments, typical of the environments that the particular application will require. In the example, the multipath mitigation is intended for use in a variety of indoor environments and so the experimental data should be obtained in a representative variety of indoor environments.

The resulting data collection will include large numbers of curves of correlation data and corresponding curves of correction data. These curves will typically be recorded digitally and so the terms set of correlation data and set of correction data will be used to avoid implying a graphical representation. By a set of data is meant a data set representing the shape of the correlation peak as a function of delay.

Pattern matching techniques are then used to group (step 48) the sets of correlation data into a number of generic shapes. Alternatively, the pattern matching could be done on the correction data. Suitable pattern-matching algorithms and procedures for classifying and grouping large numbers of sets of data are known in the art and so will not be described further. For example, statistical clustering techniques from multivariate data analysis could be used. Alternatively, the mean square error between two-parameter scaled data sets could be determined and data sets with sufficiently small mean square errors could be combined.

This pattern matching is carried out on the basis that there are only a limited number of correlation shapes due to distinct propagation effects since there are only a limited number of propagation effects. Therefore, the grouping may be determined by finding data sets that have a similar pattern or shape, after scaling in time and amplitude.

One approach is to choose the first data set and then find all other data sets with a shape that is similar except for the scale. A suitable criterion for "similar" may be a correlation of at least 90%, preferably 95% or even 99%.

One data set, suitably the first data set, is chosen as representative. This is repeated until all data sets are grouped - of course, some groups may only have one member but this does not cause difficulties.

It is possible to repeat the experiments to obtain the correction data only after the typical data sets have been recorded. This reduces the number of sets of correction data that need to be recorded, though it does, of course, require the locations of the transmitter and receiver to be very accurately recorded.

It is however generally preferred to measure the blocked -LOS correction data sets at the time of making the initial measurements. This has two advantages. Firstly, it is not necessary to re-set up measuring equipment in exactly the same locations as previously. Secondly, some features (especially people) may move over time and so taking the correction data at the same time as the correlation data avoids effects caused by movement between the time of taking the correlation data and that of taking the correction data.

A single set of correlation data and correction data for each of the groups of data is then recorded (step 50). The correlation data and correction data may be a typical element of the group, or may be obtained by some form of averaging process averaging each element of the group.

In a concrete example, the transmitter and receiver may be placed in a single room in an indoor environment, for example a kitchen. The receiver may be moved to a number of locations and the correlation data both with the LOS present and with the LOS blocked taken. This is repeated for a number of kitchens or single rooms. Then, the receiver may be placed in a room separated from the transmitter by one wall and again several results taken. This process may be repeated for many different two room scenarios, at different distances.

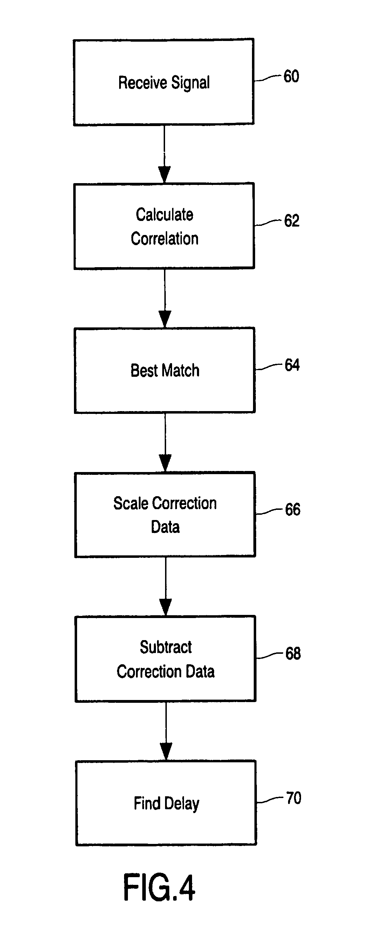

The correlation data and correction data are then stored for use in the multipath mitigation method for signals transmitted from a transmitter to a receiver. The multipath mitigation method will now be described with reference to Figure 4. Typically, the correlation data and the correction data will be stored in the receiver, though alternatively the data can be stored in another device, especially where the processing of received data is not carried out in the receiver but in the other device or a further device.

Referring to Figure 4, a signal is received in the receiver from a transmitter (step 60), in a manner well known in the art. Then, the correlation shape between the received signal and the transmitted signal is calculated as a function of delay (step 62).

Only a number of correlation values at discrete delay values need be calculated. Indeed, it is only the correlation shape at values of delay around the delay Do corresponding to the time of flight of the signal that are relevant, though as will be appreciated calculating the correlation shape only around the delay Do requires some prior knowledge of the likely values of the delay Do. If the method is repeated this may be done by calculating the correlation for values of delay D around the previous value of Do. There is nevertheless a requirement when the transmission starts to calculate the shape for a variety of possible values of D to determine the rough values of D for which there is significant power in the correlation pattern before determining the shape more finely around these values of delay D. A variety of methods of carrying out such calculation are known to the skilled person and so these will not be described further except in so far as they are relevant to the present invention.

Next, the best match of the calculated correlation shape to the various stored correlation shapes is obtained (step 64). The stored correlation shapes may be scaled linearly in both magnitude and time and so the step of finding the best match includes determining the scaling factors that give the best match. Again, suitable algorithms for determining a best match between sets of data are readily available. For example, pattern recognition techniques or least squares fits may be used.

The correction data set corresponding to the best match correlation data set is scaled (step 66) by the best match scaling factors obtained in determining the best match, and this scaled correction shape is subtracted (step 68) from the calculated received correlation shape to obtain a corrected correlation shape corrected for multipath effects. As will be noted from a comparison of curve 32 and curve 34 in Figure 2, by subtracting curve 34 from curve 32 a curve is obtained that is dominated by the shape of the line of sight peak of curve 30.

Finally, the peak of the corrected correlation shape is used to determine the delay Do (step 70). Since the corrected correlation shape is dominated by the line of sight peak 30 this is very simple.

The delay Do can be converted into a range between the transmitter and receiver by simply correcting the delay Do for any known lags in the transmitter or receiver, and multiplying by the known speed of light c in air.

In order to use the system for positioning, the process is then repeated using a plurality of different base stations for one mobile station whose position is to be determined. The mobile station may act either as the transmitter or receiver and the base stations correspondingly as either receiver or transmitter - as will be appreciated most radio frequency devices are arranged to be able to act either as transmitters or receivers.

The range of the mobile station to each of the plurality of base stations can then be used to find the location of the mobile station assuming that the location of the base stations are known. This process is known as trilateration.

By providing experimental correlation shapes in a suitable variety of environments it is possible to correct for multipath effects in a large variety of different situations. Moreover, the method is not computation intensive and so may be carried out, for example, even on mobile devices without requiring expensive processors.

The arrangement according to the invention is particularly suitable for indoor positioning systems where multipath effects are particularly acute. However, this is by no means the only application and the arrangement also is suitable for use outside. Indeed, by measuring the experimental correlation shapes both indoors and outdoors the system and method according to the invention works both indoors and outdoors, which is highly convenient.

From reading the present disclosure, other variations and modifications will be apparent to persons skilled in the art. Such variations and modifications may involve equivalent and other features which are already known in the design, manufacture and use of systems for multipath mitigation and which may be used in addition to or instead of features described herein. Although claims have been formulated in this application to particular combinations of features, it should be understood that the scope of disclosure also includes any novel feature or any novel combination of features disclosed herein either explicitly or implicitly or any generalisation thereof, whether or not it mitigates any or all of the same technical problems as does the present invention. The applicants hereby give notice that new claims may be formulated to any such features and/or combinations of such features during the prosecution of the present application or of any further applications derived therefrom.

For example, the invention has applications in all kinds of positioning systems for locating people, objects, warning devices, and in games and sports.

The invention is also applicable as a method of determining the dominant mechanism of multipath propagation in a variety of environments, which may assist in mapping the environments.

Although the invention has been described with reference to multipath mitigation in the context of a positioning system, multipath mitigation is required in other applications also and the invention may be used in these other applications. For example, the method of multipath mitigation may be used in cellular telephony to evaluate and correct for multipath effects between transmitter and the mobile unit.

One application to mobile telephony is to use the system for positioning of the mobile telephone, for example to allow the emergency services to locate the mobile telephone.

Alternatively, the invention could be used to remove multipath effects from a communications signal in exactly the same way. The approach may be more efficient to implement than prior art rake receiver techniques, and is especially suitable for signals with a high signal to noise ratio.

## Claims

1. A method of multipath mitigation when transmitting a signal from a transmitter (10) to a receiver (20), the method including:
providing a plurality of predetermined multipath correlation shapes (32) corresponding to the correlation of transmitted and received signals transmitted from transmitter to receiver in predetermined multipath environments and providing respective correction shapes (34) being correlation shapes in the multipath environments with the direct line of sight component of the signal transmitted from transmitter to receiver removed;
receiving a signal (2) from a transmitter (10) transmitting a signal of known form;
calculating a correlation shape between the received signal and the known form of the transmitted signal;
determining the best match of predetermined correlation shape to the calculated correlation shape by comparing the calculated correlation shape with a plurality of predetermined multipath correlation shapes corresponding to respective multipath environments; and
subtracting the respective correction shape corresponding to the determined best match correlation shape from the calculated received correlation shape to obtain a corrected correlation shape corrected for multipath effects.

2. A method according to claim 1 wherein the step of determining the best match of predetermined correlation shape to the calculated correlation shape includes comparing the calculated correlation shape to the predetermined correlation shapes scaled by one or more scaling parameters and determining the correlation shape and the scaling parameters that give the best match, and the step of subtracting the correction shape subtracts the correction shape corresponding to the best match scaled by the best match scaling parameters.

3. A method according to claim 1 or 2 further comprising the step of determining the time delay of the signal transmitted from transmitter to receiver using the corrected correlation shape.

4. A method of generating the predetermined multipath correlation shapes for use in the multipath mitigation method of any of claims 1 to 3, the method of generating the predetermined multipath correlation shapes including:
measuring and recording a set of experimental correlation data as a function of time using a variety of transmission and reception locations in a number of environments;
repeating the measurement and recording of experimental data of the sets of experimental correlation data whilst physically blocking the direct line of sight signal;
classifying the recorded experimental correlation data using automatic pattern matching techniques into a plurality of groups;
storing one set of correlation data representative of each group;
and storing a respective correction shape corresponding to the representative set of correlation data, the correction shape being the correlation shape of the repeated measurement without the direct LOS component corresponding to each representative data set.

5. A reception station (20) comprising
a receiver (22) arranged to receive a signal of known form transmitted from a transmission station; and
a memory (18) suitable for storing a plurality of predetermined multipath correlation shapes corresponding to the correlation of transmitted and received signals transmitted from transmitter to receiver in predetermined multipath environments and suitable for respective correction shapes being correlation shapes in the multipath environments with the direct line of sight component of the signal transmitted from transmitter to receiver removed;
wherein the reception station is arranged:
to calculate a correlation shape between the received signal and the known form of the transmitted signal;
to determine the best match of predetermined correlation shape to the calculated correlation shape by comparing the calculated correlation shape with the plurality of predetermined multipath correlation shapes corresponding to respective multipath environments; and
to subtract the respective correction shape corresponding to the determined best match correlation shape from the calculated received correlation shape to obtain a corrected correlation shape.

6. A reception station according to claim 5 arranged to determine the best match of predetermined correlation shape to the calculated correlation shape by comparing the calculated correlation shape to the predetermined correlation shapes scaled by one or more scaling parameters and determining the correlation shape and the scaling parameters that give the best match, and further arranged to subtract the correction shape scaled by the best match scaling parameters.

7. A reception station according to claim 5 or 6 further arranged to o r determine the time delay of the signal transmitted from transmitter to receiver using the corrected correlation shape.

8. A system for multipath mitigation, comprising:
a reception station (20) according to any of claims 5 to 7, and
a transmission station (10) arranged to transmit the signal of known form.

## Patentansprüche

1. Verfahren zur Mehrwegkompensation beim Übertragen eines Signals von einem Sender (10) zu einem Empfänger (20), wobei das Verfahren Folgendes umfasst:
- das Schaffen einer Anzahl vorbestimmter Mehrwegkorrelationsformen (32) entsprechend der Korrelation der gesendeten und empfangenen Signale, die von dem Sender zu dem Empfänger in einer vorbestimmten Mehrwegumgebung übertragen wurden, und das Schaffen betreffender Korrekturformen (34), die Korrelationsformen in den Mehrwegumgebungen wobei die sichtbare Komponente des von dem Sender zu dem Empfänger übertragene Komponente entfernt wird;
- das Empfangen eines Signals (2) von einem Sender (10), der ein Signal bekannter Form überträgt;
- das Berechnen einer Korrelationsform zwischen dem empfangenen Signal und der bekannten Form des übertragenen Signals;
- das Ermitteln der besten Anpassung der vorbestimmten Korrelationsform an die berechnete Korrelationsform durch einen Vergleich der berechneten Korrelationsform mit einer Anzahl vorbestimmter Mehrwegkorrelationsformen entsprechend betreffenden Mehrwegumgebungen; und
- das Subtrahieren der betreffenden Korrekturform entsprechend der bestimmten best passenden Korrelationsform aus der berechneten empfangenen Korrelationsform zum Erhalten einer korrigierten Korrelationsform, korrigiert für Mehrwegeffekte.

2. Verfahren na 1, wobei der Schritt der Ermittlung der besten Anpassung einer vorbestimmten Korrelationsform an die berechnete Korrelationsform das Vergleichen der berechneten Korrelationsform mit den vorbestimmten Korrelationsformen umfasst, die durch einen oder mehrere Skalierungsparameter skaliert sind und das Ermitteln der Korrelationsform und der Skalierungsparameter, welche die beste Anpassung ergeben, und der Schritt der Subtrahierung der Korrekturform entsprechend der besten Anpassung, die durch die best passenden Skalierungsparameter skaliert wurden.

3. Verfahren na 1 oder 2, weiterhin mit dem Schritt der Ermittlung der Zeitverzögerung des Signals, das unter Verwendung der korrigierten Korrelationsform von dem Sender zu dem Empfänger übertragen wurde.

4. Verfahren zum Erzeugen der vorbestimmten Mehrwegkorrelationsformen zur Verwendung bei dem Mehrwegkompensationsverfahren nach einem der Ansprüche 1 bis 3, wobei das Verfahren zum Erzeugen der vorbestimmten Mehrwegkorrelationsformen Folgendes umfasst:
- das Messen und Aufzeichnen eines Satzes experimenteller Korrelationsdaten als eine Funktion der Zeit unter Verwendung einer Anzahl Sende- und Empfangsstellen in einer Anzahl Umgebungen;
- das Wiederholen der Messung und Aufzeichnung experimenteller Daten der Sätze mit experimentellen Korrelationsdaten, während das direkte Signal physikalisch gesperrt wird;
- das Klassifizieren der aufgezeichneten experimentellen Korrelationsdaten unter Anwendung automatischer Musteranpassungstechniken zu einer Anzahl Gruppen;
- das Speichern eines einzigen Satzes mit Korrelationsdaten, die für jede Gruppe repräsentativ sind;
- das Speichern einer betreffenden Korrekturform entsprechend dem repräsentativen Satz mit Korrelationsdaten, wobei die Korrekturform die Korrelationsform der wiederholten Messung ohne die direkte LOS Komponente entsprechend jedem repräsentativen Datensatz ist.

5. Empfangsstation (20) die Folgendes umfasst:
- einen Empfänger (22), vorgesehen zum Empfangen eines Signals bekannter Form, übertragen von einer Sendestation; und
- einen Speicher (18), geeignet zum Speichern vorbestimmter Mehrwegkorrelationsformen entsprechend der Korrelation gesendeter und empfangener Signale, die von dem Sende zu dem Empfänger in vorbestimmten Mehrwegumgebungen übertragen wurden und die für betreffende Korrekturformen geeignet sind, die Korrelationsformen in den Mehrwegumgebungen sind, wobei die direkte Komponente des von dem Sender zu dem Empfänger übertragenen Signals entfernt ist;
wobei die Empfangsstation vorgesehen ist
- zum Berechnen einer Korrelationsform zwischen dem empfangenen Signal und der bekannten Form des übertragenen Signals;
- zum Ermitteln der besten Anpassung der vorbestimmten Korrelationsform an die berechnete Korrelationsform durch einen Vergleich der berechneten Korrelationsform mit der Anzahl vorbestimmter Mehrwegkorrelationsformen entsprechend betreffenden Mehrwegumgebungen; und
- zum Subtrahieren der betreffenden Korrekturform entsprechend der ermittelten am besten passenden Korrelationsform von der berechneten empfangenen Korrelationsform zum Erhalten einer korrigierten Korrelationsform.

6. Empfangsstation nach Anspruch 5, vorgesehen zum Ermitteln der besten Anpassung einer vorbestimmten Korrelationsform an die berechnete Korrelationsform durch einen Vergleich der berechneten Korrelationsform mit den vorbestimmten Korrelationsformen, die durch einen oder mehrere Skalierungsparameter skaliert wurden und durch Ermittlung der Korrelationsform und der Skalierungsparameter, welche die beste Anpassung ergeben, und weiterhin vorgesehen zum Subtrahieren der von den am besten passenden Skalierungsparametern skalierten Korrekturform.

7. Empfangsstation nach Anspruch 5 oder 6, weiterhin vorgesehen zum Ermitteln der Zeitverzögerung des von dem Sender zu dem Empfänger übertragenen Signals unter Verwendung der korrigierten Korrelationsform.

8. System zur Mehrwegkompensation, das Folgendes umfasst:
- eine Empfangsstation (20) nach einem der Ansprüche 5 bis 7, und
- eine Sendestation (10) vorgesehen zum Übertragen des Signals einer bekannten Form.

## Revendications

1. Procédé de lutte contre les trajets multiples lors de l'émission d'un signal d'un émetteur (10) vers un récepteur (20), le procédé comprenant :
l'utilisation d'une pluralité de formes de corrélation de trajets multiples prédéterminées (32) correspondant à la corrélation de signaux émis et reçus, émis d'un émetteur vers un récepteur dans des environnements de trajets multiples prédéterminés et l'utilisation de formes de correction respectives (34) qui sont des formes de corrélation dans les environnements de trajets multiples dont la composante de ligne de visibilité directe du signal émis de l'émetteur vers le récepteur a été éliminée ;
la réception d'un signal (2) d'un émetteur (10) émettant un signal de forme connue ;
le calcul d'une forme de corrélation entre le signal reçu et la forme connue du signal émis ;
la détermination de la meilleure correspondance entre la forme de corrélation prédéterminée et la forme de corrélation calculée en comparant la forme de corrélation calculée à une pluralité de formes de corrélation de trajets multiples prédéterminées correspondant à des environnements de trajets multiples respectifs ; et
la soustraction de la forme de correction respective correspondant à la forme de corrélation de meilleure correspondance déterminée, à la forme de corrélation reçue calculée afin d'obtenir une forme de corrélation corrigée des effets de trajets multiples.

2. Procédé selon la revendication 1, **caractérisé en ce que** l'étape de détermination de la meilleure correspondance entre la forme de corrélation prédéterminée d'une forme de corrélation prédéterminée avec la forme de corrélation calculée comprend la comparaison de la forme de corrélation calculée aux formes de corrélation prédéterminées à échelle adaptée par un ou plusieurs paramètres d'adaptation d'échelle et la détermination de la forme de corrélation et des paramètres d'adaptation d'échelle qui fournissent la meilleure correspondance, et l'étape de soustraction de la forme de correction soustrait la forme de correction correspondant à la meilleure correspondance à échelle adaptée par les paramètres d'adaptation d'échelle de meilleure correspondance.

3. Procédé selon la revendication 1 ou 2, comprenant en outre l'étape de détermination du temps de retard du signal émis de l'émetteur vers le récepteur en utilisant la forme de corrélation corrigée.

4. Procédé de production des formes de corrélation de trajets multiples prédéterminées pouvant être utilisées dans le procédé de lutte contre les trajets multiples selon l'une quelconque des revendications 1 à 3, le procédé de production des formes de corrélation de trajets multiples prédéterminées comprenant :
la mesure et l'enregistrement d'un ensemble de données de corrélation expérimentales en fonction du temps en utilisant diverses positions d'émission et de réception dans un certain nombre d'environnements ;
la répétition de la mesure et de l'enregistrement de données expérimentales des ensembles de données de corrélation expérimentales tout en occultant physiquement le signal de ligne de visibilité directe ;
la classification des données de corrélation expérimentales enregistrées en utilisant des techniques automatiques de mise en correspondance de formes en une pluralité de groupes ;
le stockage d'un ensemble de données de corrélation représentatives de chaque groupe ;
et le stockage d'une forme de correction respective correspondant à l'ensemble représentatif de données de corrélation, la forme de correction étant la forme de corrélation de la mesure répétée sans la composante de ligne de visibilité directe correspondant à chaque ensemble de données représentatif.

5. Station de réception (20) comprenant :
un récepteur (22) conçu pour recevoir un signal de forme connue émis par une station d'émission ; et
une mémoire (18) appropriée pour stocker une pluralité de formes de corrélation de trajets multiples prédéterminées correspondant à la corrélation de signaux émis et reçus, émis d'un émetteur vers un récepteur dans des environnements de trajets multiples prédéterminés et appropriés pour des formes de correction respectives qui sont des formes de corrélation dans les environnements de trajets multiples dont la composante de ligne de visibilité directe du signal émis de l'émetteur vers le récepteur a été éliminée ;
**caractérisée en ce que** la station de réception est conçue :
pour calculer une forme de corrélation entre le signal reçu et la forme connue du signal émis ;
pour déterminer la meilleure correspondance entre la forme de corrélation prédéterminée et la forme de corrélation calculée en comparant la forme de corrélation calculée à la pluralité de formes de corrélation de trajets multiples déterminées correspondant à des environnements de trajets multiples respectifs ; et
pour soustraire la forme de correction respective correspondant à la forme de corrélation de meilleure correspondance déterminée, à la forme de corrélation reçue calculée pour obtenir une forme de corrélation corrigée.

6. Station de réception selon la revendication 5, conçue pour déterminer la meilleure correspondance entre la forme de corrélation prédéterminée et la forme de corrélation calculée en comparant la forme de corrélation calculée aux formes de corrélation prédéterminées à échelle adaptée par un ou plusieurs paramètres d'adaptation d'échelle et en déterminant la forme de corrélation et les paramètres d'adaptation d'échelle qui donnent la meilleure correspondance, et conçue en outre pour soustraire la forme de correction à échelle adaptée par les paramètres d'adaptation d'échelle de meilleure correspondance.

7. Station de réception selon la revendication 5 ou 6, conçue en outre pour déterminer le temps de retard du signal émis de l'émetteur au récepteur en utilisant la forme de corrélation corrigée.

8. Système de lutte contre les trajets multiples, comprenant :
une station de réception (20) selon l'une quelconque des revendication 5 à 7, et
une station d'émission (10) conçue pour émettre le signal de forme connue.
